(19) **Europäisches Patentamt / European Patent Office / Office européen des brevets**

(11) **EP 4 679 556 A1**

(12) **EUROPEAN PATENT APPLICATION**
published in accordance with Art. 153(4) EPC

(43) Date of publication:
**14.01.2026 Bulletin 2026/03**

(21) Application number: **23926481.5**

(22) Date of filing: **28.12.2023**

(51) International Patent Classification (IPC):
**H01M 10/28** *(2006.01)* **H01M 4/32** *(2006.01)*
**H01M 4/52** *(2010.01)* **H01M 10/34** *(2006.01)*

(52) Cooperative Patent Classification (CPC):
**H01M 4/32; H01M 4/52; H01M 10/28; H01M 10/34;**
Y02E 60/10

(86) International application number:
**PCT/JP2023/047306**

(87) International publication number:
**WO 2024/185277 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.03.2023 JP 2023032862**

(71) Applicant: FDK Corporation
**Tokyo 108-8212 (JP)**

(72) Inventors:
• **TANIMOTO, Yuya**
**Tokyo 108-8212 (JP)**
• **ISHIDA, Jun**
**Tokyo 108-8212 (JP)**
• **IMOTO, Yuzo**
**Tokyo 108-8212 (JP)**
• **EHARA, Yuki**
**Tokyo 108-8212 (JP)**

(74) Representative: **Hoefer & Partner Patentanwälte mbB**
**Pilgersheimer Straße 20**
**81543 München (DE)**

(54) **ALKALINE STORAGE BATTERY, AND POSITIVE ELECTRODE PLATE AND ELECTROLYTE SOLUTION FOR ALKALINE STORAGE BATTERIES**

(57) [A Problem to be Solved] To increase a utilization rate of a positive electrode active material in an alkaline storage battery. [Solution] An alkaline storage battery 1 is an alkaline storage battery in which an electrode group formed by winding a positive electrode plate 3 and a negative electrode plate 4 with a separator 5 interposed therebetween is housed in an outer can together with an alkaline electrolyte solution. The positive electrode plate contains a positive electrode active material that contains nickel hydroxide. The nickel hydroxide is of an $\alpha$-type. The alkaline electrolyte solution in the outer can is in an amount of V ($cm^3$). The alkaline storage battery has a discharge capacity of Q (Ah). A solution/capacity ratio expressed by V/Q is 2.7 $cm^3$/Ah or more.

*FIG. 1*

**Description**

TECHNICAL FIELD

The present invention relates to an alkaline storage battery.

BACKGROUND ART

In the related art, $\beta$-nickel hydroxide $Ni(OH)_2$ has been mainly used as a positive electrode active material used in alkaline storage batteries. As shown in the following formula, $\beta$-nickel hydroxide ($\beta$-$Ni(OH)_2$) is oxidized to nickel oxyhydroxide ($\beta$-NiOOH) by charging, with one electron reacting with one Ni atom.
$Ni(OH)_2 + OH^- \rightarrow NiOOH + H_2O + e^-$ When the above reaction has occurred 100% yield, the utilization rate of the positive electrode active material was 100%. The theoretical capacity of $Ni(OH)_2$ with a 100% utilization rate shows a high value of 289 mAh/g.
Meanwhile, with the recent increase in demand for alkaline storage batteries, there is a demand for higher capacity density of nickel hydroxide, which is a positive electrode active material. It is known that nickel hydroxide has an $\alpha$-type which is different in crystal structure and higher in capacity density than that of the $\beta$-type.
Therefore, in order to increase a battery capacity of an alkaline storage battery, it has been proposed to replace the positive electrode active material from $\beta$-nickel hydroxide with $\alpha$-nickel hydroxide.

CITATION LIST

PATENT LITERATURE

Patent Literature 1: JP H11-273714A

SUMMARY OF INVENTION

TECHNICAL PROBLEM

However, in the related configuration, there was a problem that the utilization rate of the positive electrode active material was not increased simply by replacing the positive electrode active material from $\beta$-nickel hydroxide with $\alpha$-nickel hydroxide. In addition, there was also a problem that the composition of $\alpha$-nickel hydroxide was unstable in an alkaline aqueous solution used as an electrolyte solution.
Therefore, an object of the present invention is to provide an alkaline storage battery in which a positive electrode active material is high in utilization rate.

SOLUTION TO PROBLEM

In order to achieve the above object, an alkaline storage battery according to the present invention is an alkaline storage battery in which an electrode group formed by winding a positive electrode plate and a negative electrode plate with a separator interposed therebetween is housed in an outer can together with an alkaline electrolyte solution, the positive electrode plate contains a positive electrode active material that contains nickel hydroxide, the nickel hydroxide is of an $\alpha$-type, the alkaline electrolyte solution in the outer can is in an amount of V ($cm^3$), the alkaline storage battery has a discharge capacity of Q (Ah), and a solution/capacity ratio expressed by V/Q is 2.7 $cm^3$/Ah or more.

ADVANTAGEOUS EFFECTS OF INVENTION

According to the present invention, it is possible to provide an alkaline storage battery in which a positive electrode active material is high in utilization rate and high in capacity density.

BRIEF DESCRIPTION OF DRAWINGS

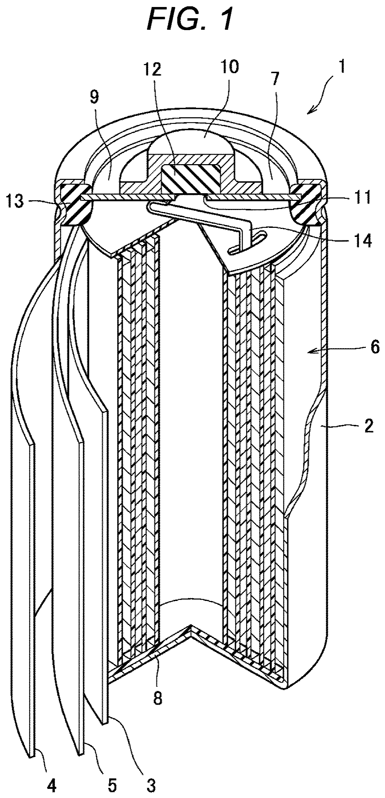

[Fig. 1] Fig. 1 is a partially cutaway perspective view of a nickel hydride battery according to an embodiment of an alkaline storage battery.

DESCRIPTION OF EMBODIMENTS

A nickel hydride battery will be described as an example of an alkaline storage battery according to the present embodiment.

1. Configuration of Alkaline Storage Battery For example, as illustrated in Fig. 1, a nickel hydride battery (hereinafter, referred to as "battery") 1 houses an electrode group 6 together with an alkaline electrolyte solution in a cylindrical outer can 2 having an AA size. The electrode group 6 is formed by stacking a positive electrode plate 3, a separator 5, and a negative electrode plate 4 in this order and spirally winding them. The outer can 2 has a bottomed cylindrical shape with an upper end opened. The upper end of the outer can 2 is sealed with a sealing body 7.

In the outer can 2, a bottom wall 8 is conductive and functions as a negative electrode terminal. The sealing body 7 includes a lid plate 9 and a positive electrode terminal 10. The lid plate 9 is conductive and has a gas drainage hole 11 at the center. A rubber valve body 12 that closes the gas drainage hole 11 is disposed on an outer surface of the lid plate 9. The lid plate 9 is disposed at the opened end portion of the outer can 2 via a ring-shaped gasket 13. The lid plate 9 closes the opening by caulking an opened edge of the outer can 2. The positive electrode terminal 10 is attached to the lid plate 9.

The electrode group 6 includes the strip-shaped positive electrode plate 3, the strip-shaped negative electrode plate 4, and the strip-shaped separator 5. The electrode group 6 is spirally wound in a state in which the separator 5 is sandwiched between the positive electrode plate 3 and the negative electrode plate 4, and has a substantially columnar shape. That is, the positive electrode plate 3 and the negative electrode plate 4 face each other with the separator 5 interposed therebetween and are stacked in a radial direction of the outer can 2.

In the outer can 2, a positive electrode lead 14 is disposed between one end of the electrode group 6 and the lid plate 9. Ends of the positive electrode lead 14 are electrically connected to the positive electrode plate 3 and the lid plate 9, respectively.

The positive electrode plate 3 includes a conductive positive electrode core having a porous structure, and a positive electrode mixture applied to a surface of the positive electrode core and inside the pores of the positive electrode core. For example, the positive electrode core is made of a nickel-plated mesh-like, sponge-like or fibrous metal body or foamed nickel.

The positive electrode mixture contains positive electrode active material particles, a conductive material, a positive electrode additive, and a binder. The positive electrode active material particles are nickel hydroxide ($Ni(OH)_2$) particles or higher order nickel hydroxide particles. Cobalt hydroxide ($Co(OH)_2$) is used as the conductive material. In the present embodiment, nickel hydroxide having an $\alpha$-type single phase crystal structure is used. It is preferable that at least one of cobalt, aluminum, yttrium, and manganese is solid-dissolved in the nickel hydroxide particles having the single $\alpha$-phase. As the positive electrode additive, $Y_2O_3$, $Nb_2O_5$, $TiO_2$, and $Yb_2O_3$ are used.

The negative electrode plate 4 includes a strip-shaped conductive negative electrode core. A negative electrode mixture is applied to the negative electrode core. The negative electrode core body is prepared from a sheet-shaped metal material having through holes distributed therein. For example, the negative electrode core is made of an iron punched sheet with a nickel-plated surface. The negative electrode mixture is applied to the negative electrode core to form a negative electrode mixture layer. The negative electrode mixture contains particles of a hydrogen storage alloy, a negative electrode additive, a conductive material, and a binder.

The hydrogen storage alloy is an alloy capable of absorbing and releasing hydrogen as a negative electrode active material. As the hydrogen storage alloy, a general hydrogen storage alloy may be used. Here, in the present disclosure, it is preferable to use a rare earth-Mg-Ni-based hydrogen storage alloy containing rare earth elements, Mg, and Ni. In the present embodiment, a hydrogen storage alloy is used as the negative electrode mixture, but the negative electrode plate may be formed using cadmium or zinc instead of the hydrogen storage alloy.

The separator 5 is made of, for example, a nonwoven fabric made of polypropylene fibers subjected to a fluorine treatment or a sulfonation treatment.

The alkaline electrolyte solution is injected into the outer can 2. The alkaline electrolyte solution is impregnated into the positive electrode plate 3, the negative electrode plate 4, and the separator 5, and contributes to an electrochemical reaction between the positive electrode plate 3 and the negative electrode plate 4, that is, a so-called charge/discharge reaction. As the alkaline electrolyte solution, an alkaline electrolyte solution containing NaOH as a main solute is used.

2. Method for Producing Battery Next, a method for producing the battery 1 will be described.

(1) Preparation of Positive Electrode Plate Nickel sulfate, aluminum sulfate, and cobalt sulfate are weighed to a predetermined composition, and the weighed nickel sulfate, aluminum sulfate, and cobalt sulfate are added to a 1 mol/L sulfuric acid aqueous solution to prepare a mixed aqueous solution. A 10 mol/L sodium hydroxide aqueous solution is gradually added to this mixed aqueous solution while stirring to stabilize the pH of the aqueous solution during the reaction at 13 to 14, thereby producing nickel hydroxide particles in which Al and Co are solid-dissolved mainly with nickel hydroxide. Accordingly, a nickel hydroxide powder which is a mixture of nickel hydroxide particles in which Al and Co are solid-dissolved is obtained as a positive electrode active material powder. In the present embodiment, this $\alpha$-nickel hydroxide has a composition of Ni:Al:Co of 80:15:5 (molar ratio).

When a conductive layer is to be formed on a surface of the nickel hydroxide particle, the following treatment is performed.

First, the nickel hydroxide particles obtained as described above are put into an ammonia aqueous solution, and a cobalt sulfate aqueous solution is added to the aqueous solution. This causes the nickel hydroxide particle to act as a core and cobalt hydroxide to precipitate on the surface of the core. Thus, an active material including a conductive layer made of cobalt hydroxide is formed.

The obtained nickel hydroxide was subjected to X-ray diffraction (XRD) analysis. For the analysis, a powder XRD device (MiniFlex600 manufactured by Rigaku Corporation) was used. Analysis conditions were as follows: X-ray source: CuK$\alpha$, tube voltage: 40 keV, tube current: 15 mA, scan speed: 5 degrees/min, and step width: 0.02 degrees. From a profile of the analysis result, it is confirmed that the crystal structure of nickel hydroxide is an $\alpha$-type single phase.

3.5 parts by mass of cobalt hydroxide and 0.2 parts by mass of a hydroxypropyl cellulose (HPC) powder are mixed with 100 parts by mass of the positive electrode active material powder. Then, 30 parts by mass of water and 0.3 parts by mass of PTFE are added to prepare a positive electrode active material slurry. The positive electrode active material slurry is filled in a tape-shaped positive electrode core made of foamed nickel and dried. Thereafter, the positive electrode core on which the slurry has been dried is rolled and cut to prepare the positive electrode plate 3 for AA size.

(2) Preparation of Negative Electrode Plate First, a rare earth component containing 30 mass% lanthanum (La) and 70 mass% samarium (Sm) is prepared, and the obtained rare earth component, Mg, Ni, and Al are weighed to prepare a mixture having a molar ratio of 0.90:0.10:3.33:0.17. The mixture is melted in an induction melting furnace. The molten metal of the mixture is poured into a mold and cooled to room temperature to form an ingot of a hydrogen storage alloy. When the composition of a sample taken from the ingot was analyzed by inductively coupled plasma spectroscopy (ICP), the composition of the hydrogen storage alloy was $La_{0.30}\ Sm_{0.70}\ Mg_{0.10}\ Ni_{3.33}\ Al_{0.17}$.

The ingot of the hydrogen storage alloy is subjected to a heat treatment at a temperature of 1000°C for 10 hours in an argon gas atmosphere. After the heat treatment, the ingot cooled to room temperature is mechanically crushed in an argon gas atmosphere to obtain a hydrogen storage alloy powder consisting of hydrogen storage alloy particles. The particle size of the hydrogen storage alloy particle was measured using a laser diffraction/scattering type particle size distribution measuring device, and the mean volume diameter of the hydrogen storage alloy particle was found to be 60 $\mu$m.

To 100 parts by mass of this hydrogen storage alloy powder, 0.4 parts by mass of sodium polyacrylate, 0.1 parts by mass of carboxymethyl cellulose, 1.0 part by mass of a dispersion of styrene-butadiene rubber (SBR), 1.0 part by mass of carbon black, and 30 parts by mass of water are added and kneaded to prepare a paste of a negative electrode mixture. This paste is applied to both sides of a tape-shaped iron perforated plate so that each side has a uniform thickness. The perforated plate has a thickness of 60 $\mu$m, and the surface thereof is nickel-plated.

After the paste is dried, the perforated plate is rolled to increase the alloy amount per unit volume of the negative electrode mixture, and then cut into a predetermined size to prepare the negative electrode plate 4 for AA size.

(3) Assembly of Battery The positive electrode plate 3 and the negative electrode plate 4 are stacked so that the longitudinal directions thereof are aligned, and then are spirally wound with the separator 5 sandwiched therebetween to form the electrode group 6. In the present embodiment, the separator 5 is made of a nonwoven fabric made of sulfonated polypropylene fibers, and has a thickness of 0.1 mm (basis weight 53 g/m$_2$).

The electrode group 6 is housed in the outer can 2 such that a negative electrode side is in contact with the bottom wall 8 of the outer can 2. The alkaline electrolyte solution is an aqueous solution containing KOH, NaOH, and LiOH. In the present embodiment, the alkaline electrolyte solution contains KOH, NaOH, and LiOH in a ratio of KOH:NaOH:LiOH = 0.8:7.0:0.02.

Next, the electrode group 6 is housed in the outer can 2, and the alkaline electrolyte solution is injected. Thereafter, the opening of the outer can 2 is closed with the sealing body 7 to assemble the AA-size nickel hydride battery 1 having a nominal capacity of 1000 mAh. The nominal capacity of the battery 1 is a discharge capacity when the battery 1 is charged at 0.2 It for 16 hours in an environment at a temperature of 25°C and discharged at 0.4 It until the battery voltage becomes 1.0 V. Thus, the battery 1 is assembled.

3. Initial Activation Treatment of Battery The assembled battery is charged at 0.2 It for 16 hours in an environment at temperature of 25°C, and then discharged at 0.4 It until the battery voltage becomes 1.0 V. This charge and discharge operation constitutes one cycle. This charge and discharge cycle is repeated five times to perform the initial activation treatment and make the battery ready for use.

4. Evaluation of Battery Characteristics (1) Evaluation Method The initially activated battery is charged at a charging current of 0.1 It for 16 hours in a temperature environment of 25°C, and then discharged at a discharging current of 0.2 It in a temperature environment of 25°C. The discharge capacity of the battery is measured when the battery is discharged until the battery voltage becomes the discharge cut-off voltage (1.0 V). The utilization rate of the positive electrode active material is calculated from the measured discharge capacity using the following equation.

Utilization rate (%) = {discharge capacity (mAh)/(amount of nickel hydroxide filled in positive electrode plate (g)/289 (mAh/g))} $\times$ 100, where 289 (mAh/g) is the theoretical capacity per 1 g of $Ni(OH)_2$.

The ratio of the electrolyte solution amount to the discharge capacity (hereinafter, referred to as a solution/capacity ratio) is calculated using the following equation.

Solution/capacity ratio ($cm^3$/Ah) = Amount of electrolyte solution injected into battery ($cm^3$)/discharge capacity (Ah)

(2) Evaluation Results In order to investigate the relation between the utilization rate and the solution/capacity ratio of batteries using $\alpha$-nickel hydroxide as the positive electrode active material and to optimize the batteries, nine batteries were prepared in which $\alpha$-nickel hydroxide was filled into the positive electrode plate as the positive electrode active material. The discharge capacity of each battery was measured by the above evaluation method, and the amount of $\alpha$-nickel hydroxide filled in the positive electrode plate of each battery and the amount of electrolyte solution injected into the battery were also measured. From the measured values, the utilization rate of the positive electrode active material, the solution/capacity ratio, the electrolyte solution amount, and a solution/space ratio were calculated and shown in Table 1 below.

The solution/space ratio was calculated using the following equation. Solution/space ratio (%) = {volume of injected electrolyte solution (mL)/(volume of battery ($cm^3$) - total volume of components excluding electrolyte solution ($cm^3$))} x 100

[Table 1]

[Table 1]

| Positive electrode active material | | Utilization rate (%) | Solution/capacity ratio ($cm^3$/Ah) | Electrolyte solution amount (mL) | Solution/space ratio (%) | Occurrence of leakage |
|---|---|---|---|---|---|---|
| $\alpha$-nickel hydroxide | Comparative example 1 | 112.0 | 2.57 | 2.57 | 76.3 | No |
| | Comparative example 2 | 115.0 | 2.65 | 2.65 | 77.7 | No |
| | Comparative example 3 | 119.0 | 2.67 | 2.67 | 77.1 | No |
| | Example 1 | 121.0 | 2.69 | 2.69 | 77.1 | No |
| | Example 2 | 138.9 | 3.28 | 3.14 | 83.6 | No |
| | Example 3 | 139.1 | 3.46 | 3.25 | 86.4 | No |
| | Example 4 | 141.0 | 3.63 | 3.38 | 88.9 | No |
| | Example 5 | 144.1 | 3.75 | 3.44 | 89.5 | No |
| | Example 6 | 147.7 | 4.32 | 3.67 | 93.0 | No |

For comparison, four batteries using $\beta$-nickel hydroxide as the positive electrode active material were prepared as Comparative Examples 4 to 7. The discharge capacities of the batteries according to Comparative Examples 4 to 7 were measured using the same evaluation method as that for the batteries according to Examples 1 to 6. Further, for the batteries according to Comparative Examples 4 to 7, the amount of $\beta$-nickel hydroxide filled in the positive electrode plate of each battery and the amount of electrolyte solution injected into the battery were measured. From the measured values, the utilization rate of the positive electrode active material, the solution/capacity ratio, the electrolyte solution amount, and a solution/space ratio were calculated and shown in Table 2 below.

[Table 2]

[Table 2]

| Positive electrode active material | | Utilization rate (%) | Solution/capacity ratio (cm$^3$/Ah) | Electrolyte solution amount (mL) | Solution/space ratio (%) | Occurrence of leakage |
|---|---|---|---|---|---|---|
| β-nickel hydroxide | Comparative example 4 | 106.5 | 3.14 | 3.14 | 77.6 | No |
| | Comparative example 5 | 106.6 | 3.32 | 3.32 | 82.1 | Yes |
| | Comparative example 6 | 106.7 | 3.50 | 3.5 | 86.5 | Yes |
| | Comparative example 7 | 106.8 | 3.61 | 3.61 | 89.3 | Yes |

As can be seen from Tables 1 and 2, when α-nickel hydroxide was used as the positive electrode active material and the solution/capacity ratio was 2.67 cm$^3$/Ah or less, the utilization rate was 120% or less, as can be seen from Comparative Examples 1 to 3. However, as shown in Examples 1 to 6, when the solution/capacity ratio was 2.69 cm$^3$/Ah or more, the utilization rate was 121% to 147.7%, which was a high utilization rate. In addition, in Examples 2 to 6 in which the solution/capacity ratio exceeded 3.0 cm$^3$/Ah, the solution/space ratio exceeded 80% in any battery, but no leakage occurred and the battery can be used safely.

Meanwhile, in Comparative Examples 4 to 7 in which β-nickel hydroxide was used as the positive electrode active material, even when the solution/capacity ratio was as high as 3.61 cm$^3$/Ah, the utilization rate remained as low as 106.8%. In addition, in the batteries according to Comparative Examples 5 to 7 in which the solution/space ratio exceeded 80%, leakage occurred from the batteries.

From the above, in a battery using α-nickel hydroxide as the positive electrode active material, when the solution/capacity ratio is 2.7 cm$^3$/Ah or more, a battery having a high utilization rate in which the utilization ratio of the positive electrode active material is 120% or more can be obtained without causing leakage from the battery. That is, according to the present invention, it is possible to provide a nickel hydrogen secondary battery in which a positive electrode active material is high in utilization rate and high in capacity density.

In the above embodiment, an AA-size nickel hydride battery has been described, but the present invention can also be applied to an alkaline storage battery in which a positive electrode active material is α-nickel hydroxide, a solution/capacity ratio is 2.7 cm$^3$/Ah or more, and cadmium and zinc are used for a negative electrode plate, and similar effects can be obtained.

REFERENCE SIGNS LIST

1 nickel hydrogen secondary battery
2 outer can
3 positive electrode plate
4 negative electrode plate
5 separator

**Claims**

1. An alkaline storage battery, comprising:

a positive electrode plate containing nickel hydroxide as a positive electrode active material; and
a negative electrode plate,
the positive electrode plate and the negative electrode plate being wound with a separator interposed therebetween and housed in an outer can together with an alkaline electrolyte solution, wherein
the nickel hydroxide is of an $\alpha$-type, and when the amount of the alkaline electrolyte solution in the outer can is V ($cm^3$) and a discharge capacity of the alkaline storage battery is Q (Ah), a solution/capacity ratio expressed by V/Q is 2.7 $cm^3$/Ah or more.

# FIG. 1

## INTERNATIONAL SEARCH REPORT

| International application No. |
|---|
| **PCT/JP2023/047306** |

| A. | CLASSIFICATION OF SUBJECT MATTER |
|---|---|

*H01M 10/28*(2006.01)i; *H01M 4/32*(2006.01)i; *H01M 4/52*(2010.01)i; *H01M 10/34*(2006.01)i
FI: H01M10/28 A; H01M4/32; H01M4/52; H01M10/34

According to International Patent Classification (IPC) or to both national classification and IPC

| B. | FIELDS SEARCHED |
|---|---|

Minimum documentation searched (classification system followed by classification symbols)

H01M10/28; H01M4/32; H01M4/52; H01M10/34

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII); CAplus/REGISTRY (STN)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2005-108610 A (SANYO ELECTRIC CO., LTD.) 21 April 2005 (2005-04-21) claim 1, paragraphs [0020], [0025], [0029] | 1 |
| Y | JP 2017-76470 A (SHONAN CORUN ENERGY CO., LTD.) 20 April 2017 (2017-04-20) claims 1, 4, paragraphs [0020], [0033], [0034], table 4 | 1 |
| Y | JP 2012-204177 A (KAWASAKI JUKOGYO KABUSHIKI KAISHA) 22 October 2012 (2012-10-22) paragraph [0114] | 1 |
| A | 安部武志, 2 次電池の基礎・原理, 応用物理, 2021, vol. 90, no. 8, pp. 516-520, (ABE, Takeshi. 2 The basics and principles of rechargeable batteries.) in particular, p. 517 section "6. Battery capacity" | 1 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 March 2024** | **12 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2023/047306**

| Patent document cited in search report | | | Publication date (day/month/year) | Patent family member(s) | Publication date (day/month/year) |
|---|---|---|---|---|---|
| JP | 2005-108610 | A | 21 April 2005 | (Family: none) | |
| JP | 2017-76470 | A | 20 April 2017 | CN 106571435 A claims 1, 4, paragraphs [0025], [0038], [0039], table 4 | |
| JP | 2012-204177 | A | 22 October 2012 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11273714 A